# EUROPEAN PATENT APPLICATION

(11) **EP 2 930 091 A1**
(43) Date of publication of application: **14.10.2015**
(21) Application number: 13859698.6
(22) Date of filing: 05.12.2013
(51) Int. Cl.: B62K 5/06, B62K 25/12, B60G 11/14

(54) **UPRIGHT THREE-WHEELED VEHICLE HAVING SHOCK ABSORBING MEANS**

(30) Priority: 06.12.2012 KR 20120141087
(71) Applicant: Rim, Jin Wook, Seoul 140-030 (KR)
(72) Inventor: Rim, Jin Wook, Seoul 140-030 (KR)
(74) Representative: Von Kreisler Selting Werner - Partnerschaft von Patentanwälten und Rechtsanwälten mbB
(86) International application number: PCT/KR2013/011209
(87) International publication number: WO 2014/088336

(57) **Abstract**

An upright three-wheeled vehicle. A footboard unit is connected between the pair of rear wheel units. A handlebar unit extends from the frame. A bottom portion of a shaft of the handle unit is rotatably installed in a connecting frame. A fixed frame fixedly connects the front top surface of the footboard unit at both sides of the connecting frame. A first variable frame connected to an end of a shaft of the handlebar unit rotates the front wheel unit following the rotation of the shaft. A second variable frame is coupled to both ends of the first variable frame and fixed and installed on a central shaft of the front wheel unit. A shock absorbing means between the upper central portion of the second variable frame and the upper central portion of the first variable frame absorbs shocks by receiving forwardly biased force due to inertia when stopping.

## Description

### TECHNICAL FIELD

The present invention relates to a three-wheeled vehicle. More particularly, the present invention relates to an upright three-wheeled vehicle having a shock absorber able to absorb inertia-induced force that would otherwise cause the body of a rider to lean forward in the event of braking when the rider is driving the vehicle in an upright position with his/her hands grasping the handlebar, thereby preventing an accident.

### BACKGROUND ART

Recently, a variety of long-range and short-range vehicles have been distributed.

Examples of the vehicles include bicycles that are propelled to ride in response to the pedaling of riders and motorcycles or cars that are driven using fossil fuels or electricity.

Also provided are upright three-wheeled vehicles that operate using electrical power to transport an upright rider in a simple manner. An example thereof was disclosed in Korean Registered Utility Model No. 20-0283894.

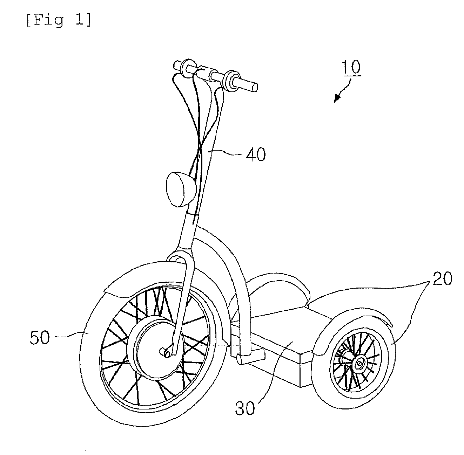

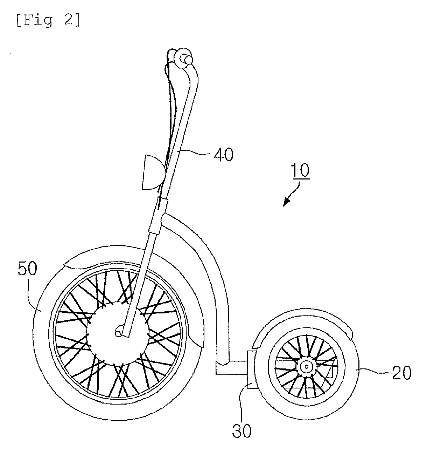

FIG. 1 and FIG. 2 are perspective and side-elevation views illustrating an upright three-wheeled vehicle of the related art. As illustrated in these figures, the upright three-wheeled vehicle 10 of the related art includes rear wheel parts 20, a footboard part 30, a handlebar part 40, and a single front wheel part 50. The rear wheel parts 20 are disposed on both sides such that the rear wheel parts 20 face each other. The footboard part 30 is disposed between the rear wheel parts 20, allowing a user to stand thereon in an upright position. The handlebar part 40 is connected to the footboard part 30, and is grasped by the user in the upright position. The front wheel part 50 is connected to the handlebar part 40 such that the front wheel part 50 is steered in the lateral direction. The front wheel part 50 is disposed in a position corresponding to the middle of the rear wheels.

When the user standing in an upright position on the footboard part 30 starts the upright three-wheeled vehicle and operates the levers, the front wheel part 50 and the rear wheel parts 20 operate, causing the vehicle to travel. In this state, the user drives the vehicle to an intended place by controlling the traveling direction by steering the handlebar part 40 in the lateral direction.

However, in the upright three-wheeled vehicle 10 of the related art as above, when the traveling vehicle is stopped in response to the operation of a brake, the body of the rider is pushed forward by way of inertia. The possibility of an accident is high, which is problematic.

In particular, a greater amount of inertia acts in the event of sudden braking, such that the rear wheel parts 20, the footboard part 30, and the body of the rider on the footboard part 30 are leaned forward. In this case, there are significant problems in that the rider may be thrown forward and the upright three-wheeled vehicle may be overthrown.

That is, in the event of sudden braking, the body of the rider is leaned forward by inertia, in which the upper body is leaned forward by force concentrated to both hands grasping the handlebar part 40. At the same time, both feet on the footboard part 30 are temporarily raised, and the rear wheel parts 20 and the footboard part 30 rotate about the front wheel part 50, overthrowing the vehicle. The possibility of an accident is high, which is problematic.

In addition, the upper body of the rider may strongly collide against the handlebar part 40 due to inertia, thereby damaging the rider.

### DISCLOSURE

### Technical Problem

The present invention has been made keeping in mind the above problems occurring in the related art, and the present invention is intended to provide an upright three-wheeled vehicle having a shock absorber able to prevent the body of a rider from leaning forward by absorbing inertia-induced force that causes the body of the rider to lean forward using the elasticity of a handlebar part in the event of braking when the rider is driving the vehicle in an upright position with his/her hands grasping the handlebar part, thereby preventing an accident.

### Technical Solution

In order to achieve the above object, according to an aspect of the present invention, an upright three-wheeled vehicle includes: a pair of rear wheel parts disposed on both sides, the rear wheel parts facing each other; a footboard part disposed between and connected to the pair of rear wheel parts, allowing a rider to put both feet thereon in an upright position; a handlebar part extending upward from the frame, the handlebar part controlling the direction in which a front wheel part rotates; a frame, wherein the frame includes a connecting frame within which a portion of a lower end of a shaft of the handlebar part is rotatably accommodated, a fixed frame fixedly connecting both side portions of the connecting frame to a front top surface of the footboard part, a first variable frame connected to a distal end of the shaft of the handlebar part to rotate the front wheel part following rotation of the shaft, and a second variable frame fixedly disposed on a central axis of the front wheel part; and a shock absorber disposed between an upper central portion of the second variable frame and an upper central portion of the first variable frame, wherein the shock absorber absorbs inertia-induced force that causes a rider to lean forward in the event of braking.

According to an embodiment of the present invention, the second variable frame may include a vertical section rounded to surround an upper portion of the front wheel part and a horizontal section extending in a horizontal direction bent by a predetermined angle from the vertical part, a distal end of the horizontal section being coupled to both ends of the first variable frame by means of a hinge.

According to an embodiment of the present invention, the shock absorber may be implemented as a coil spring.

According to an embodiment of the present invention, the bent portions of the vertical section and the horizontal section of the second variable frame may be fixedly disposed with respect to the central axis of the front wheel part.

### Advantageous Effects

According to embodiments of the present invention, the upright three-wheeled vehicle having a shock absorber can prevent the body of a rider from leaning forward by absorbing inertia-induced force that causes the body of the rider to lean forward using the elasticity of the handlebar part in the event of braking when the rider is driving the vehicle in an upright position with his/her hands grasping the handlebar part, thereby preventing an accident.

### DESCRIPTION OF DRAWINGS

FIG. 1 and FIG. 2 are perspective and side-elevation views illustrating an upright three-wheeled vehicle of the related art;
FIG. 3 is a perspective view illustrating an upright three-wheeled vehicle having a shock absorber according to the present invention;
FIG. 4 is a side elevation view illustrating the upright three-wheeled vehicle having a shock absorber according to the present invention; and
FIG. 5 is an enlarged view illustrating the key parts of the upright three-wheeled vehicle having a shock absorber according to the present invention.

### BEST MODE

According to an embodiment of the present invention, an upright three-wheeled vehicle includes:
a pair of rear wheel parts disposed on both sides, the rear wheel parts facing each other;
a footboard part disposed between and connected to the pair of rear wheel parts, allowing a rider to put both feet thereon in an upright position;
a handlebar part extending upward from the frame, the handlebar part controlling the direction in which a front wheel part rotates;
a frame, wherein the frame includes a connecting frame within which a portion of a lower end of a shaft of the handlebar part is rotatably accommodated, a fixed frame fixedly connecting both side portions of the connecting frame to a front top surface of the footboard part, a first variable frame connected to a distal end of the shaft of the handlebar part to rotate the front wheel part following rotation of the shaft, and a second variable frame fixedly disposed on a central axis of the front wheel part; and
a shock absorber disposed between an upper central portion of the second variable frame and an upper central portion of the first variable frame, wherein the shock absorber absorbs inertia-induced force that causes a rider to lean forward in the event of braking.

### MODE FOR INVENTION

Reference will now be made in detail to the present invention, embodiments of which are illustrated in the accompanying drawings. Reference should be made to the drawings, in which the same reference numerals and signs may be used throughout the different drawings to designate the same or similar components. In the following description of the present invention, detailed descriptions of known functions and components incorporated herein will be omitted in the case that the subject matter of the present invention is rendered unclear thereby.

It will be understood that, although terms "first," "second," "A," "B," "(a)," "(b)," etc. may be used herein to describe various elements, these terms are only used to distinguish one element from another element. The substance, sequence or order of these elements are not limed by these terms. It will be understood that when an element is referred to as being "connected to" or "coupled to" another element, not only can it be "directly connected" or "coupled to" the other element, but also can it be "indirectly connected or coupled to" the other element via an "intervening" element.

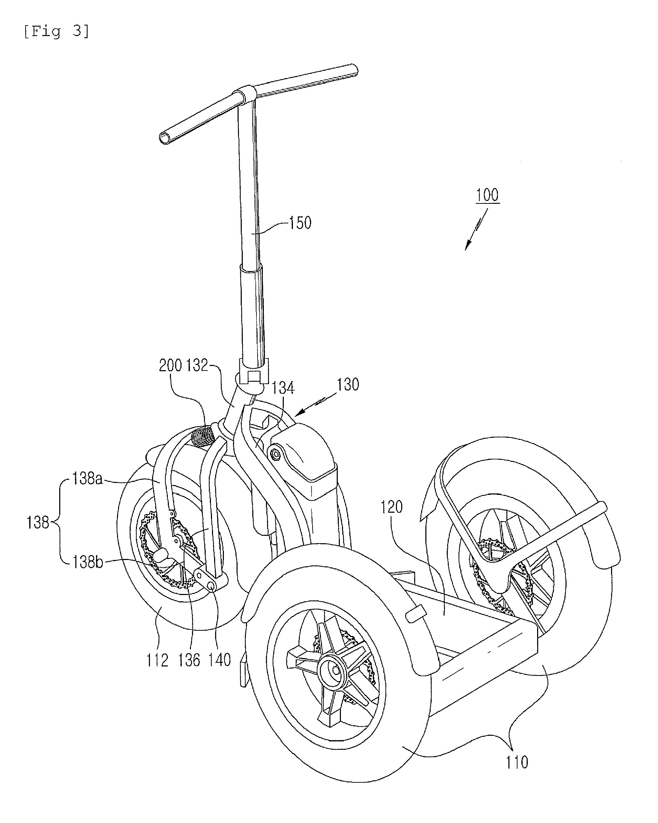

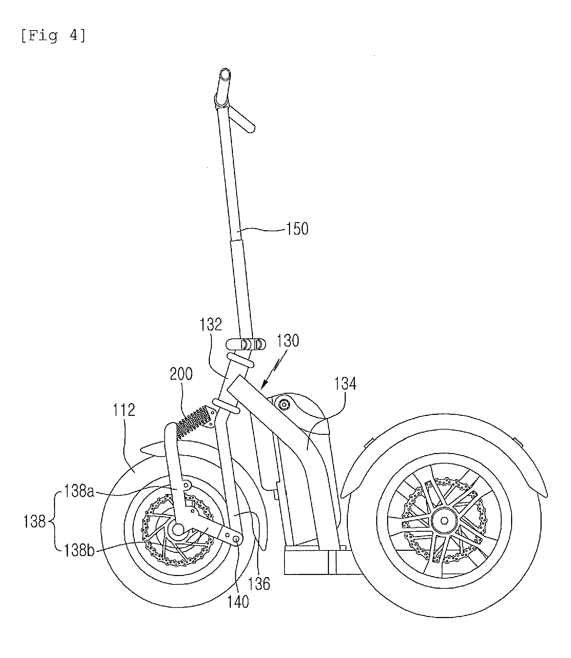

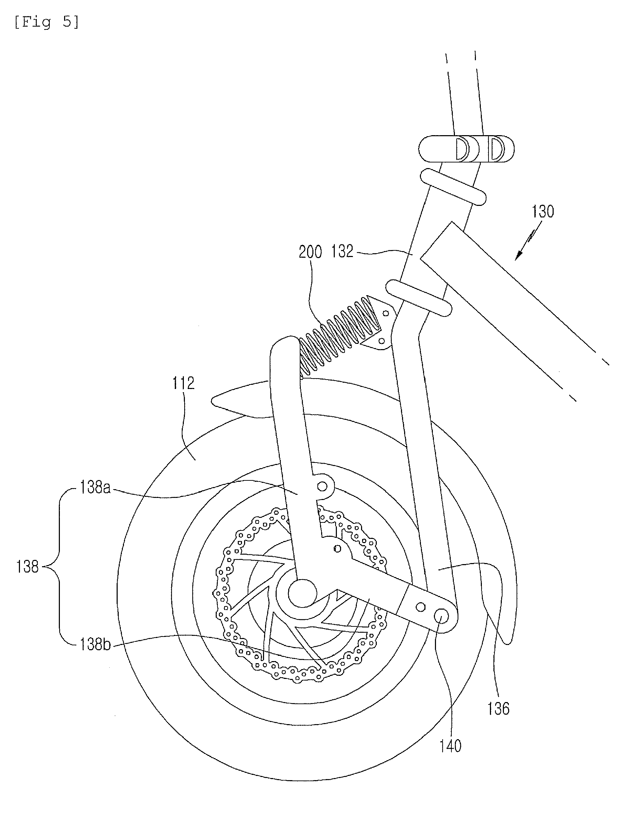

FIG. 3 is a perspective view illustrating an upright three-wheeled vehicle having a shock absorber according to the present invention, FIG. 4 is a side elevation view illustrating the upright three-wheeled vehicle having a shock absorber according to the present invention, and FIG. 5 is an enlarged view illustrating the key parts of the upright three-wheeled vehicle having a shock absorber according to the present invention.

As illustrated in the drawings, an upright three-wheeled vehicle 100 having a shock absorber according to the present invention includes a pair of rear wheel parts 110, a front wheel frame 120, a footboard part 120, a frame 130, and a handlebar part 150. The rear wheel parts 110 are disposed on both sides such that the rear wheel parts 110 face each other. The footboard part 120 is disposed between the both rear wheel parts 110, allowing a rider to put both feet thereon in an upright position. The frame 130 connects the front section of the footboard part 120 to the front wheel part 112. The handlebar part 150 extends upward from the frame 130, and serves to control the direction in which the front wheel part 112 rotates.

The frame 130 includes a connecting frame 130 and a fixed frame 134. A portion of the lower end of the shaft of the handlebar part 150 is rotatably disposed within the connecting frame 132. The fixed frame 134 connects both sides of the connecting frame 132 and the footboard part 120 by fixedly connecting a portion of the connecting frame 132 to the front top surface of the footboard part 120.

Here, the connecting frame 132 and the handlebar part 150 are directly coupled to each other such that the shaft of the handlebar part 150 is rotatable and the connecting frame 132 and the handlebar part 150 are positioned coaxial.

The connecting frame 132 and the handlebar part 150 are positioned coaxial such that forward inertia is transferred to and absorbed by the connecting frame 132 and the handlebar part 150 without being dispersed when braking is performed in the upright position of the rider.

In addition, the frame 130 includes a first variable frame 136 and a second variable frame 138. The first variable frame 136 is connected to the distal end of the shaft of the handlebar part 150, and rotates following the rotation of the shaft. Both ends of the second variable frame 138 are hinge-coupled to both ends of the first variable frame 136, and the second variable frame 138 is fixed the front wheel part 112.

Here, the second variable frame 138 includes a vertical section 138a rounded to surround the upper portion of the front wheel part 112 and a horizontal section 138b extending in the horizontal direction bent by a predetermined angle from the vertical part 138a. The distal end of the horizontal section 138b is coupled to both ends of the first variable frame 136 by means of a hinge 140.

In addition, the bent portions of the vertical section 138a and the horizontal section 138b of the second variable frame 138 are fixedly disposed with respect to the central axis of the front wheel part 112, thereby staying in the fixed position.

In the above-described second variable frame 138, only the horizontal section 138b is hinge-coupled to the first variable frame 136. The point where the horizontal part 138b intersects the vertical part 138a is fixed disposed on the central axis of the front wheel part 112.

A shock absorber 200 is disposed between the upper central portion of the second variable frame 138 and the upper central portion of the first variable frame 136. The shock absorber 200 according to the present embodiment is illustrated as being a coil spring. However, the shock absorber 200 may be implemented as anything able to absorb shocks in addition to the coil spring.

Accordingly, the frame 130 according to the invention includes the first variable frame 136, the second variable frame 138, and the shock absorber 200 in order to absorb inertia causing the rider to move forward, i.e. horizontal inertia directed to the front wheel part 112 from the position of the rider, in the event of braking when the rider is driving the vehicle in the upright position with his/her hands grasping the handlebar.

Reference will now be made to the operational relationship of the upright three-wheeled vehicle 100 having a shock absorber as configured above.

When the user standing in an upright position on the footboard part 120 starts the upright three-wheeled vehicle and operates the levers, the front wheel part 112 and the rear wheel parts 110 operate, causing the vehicle to travel.

In this state, when the rider turns the handlebar part 150 to the right or left in order to change the direction in which the vehicle travels, the first variable frame 136 connected to the distal end of the shaft of the handlebar part rotates following the handlebar part, and the second variable frame 138 connected to the first variable frame 136 by means of the hinge 140 also rotates following the first variable frame. Consequently, the front wheel part 112, the central axis of which is fixed to the second variable frame 138, rotates following the second variable frame, thereby changing the direction of the vehicle.

After having travelled while changing the direction by manipulating the handlebar part 150 as above, when the rider operates the brake, the driving of the front wheel part 112 or the rear wheel parts 110 is stopped, such that the vehicle is decelerated or stopped by friction with the road.

When the vehicle is decelerated or stopped by braking, the body of the rider is leaned forward by way of inertia. Force is concentrated to the handlebar part 150 that the rider is grasping with both hands, generating a forward-pushing force.

The force is transferred to the first variable frame 136 connected to the distal end of the shaft of the handlebar part 150, and the first variable frame 136 transfers the force to the shock absorber 200 implemented as a coil spring. Then, the shock absorber 200 absorbs the force of pushing the rider by way of inertia caused by braking, thereby preventing the body of the rider from being leaned forward.

Since both ends of the first variable frame 136 are rotatably coupled to both ends of the horizontal section 138b of the second variable frame 138 by means of the hinge 140, the first variable frame 136 can be subjected to a forward force, thereby compressing the shock absorber 200.

The shock absorber 200 instantaneously absorbs the braking-induced force that would otherwise cause the rider to be leaned forward. The rider stays with both feet on the footboard part 120, and the load of the weight of the rider is continuously applied to the footboard part 120. This can consequently prevent the footboard part 120 or the rear wheel parts 110 from being raised by way of inertia, thereby preventing a rollover.

In addition, the handlebar part 150 grasped by the rider is pushed forward a predetermined length by way of the braking-induced inertia. This reduces the possibility that the upper body of the rider may collide against the handlebar part 150, thereby further reducing the possibility of an accident.

Although all of the elements of the foregoing embodiment of the invention have been described as being assembled into and operating as one unit, the invention is not limited thereto. One or more of these elements can be selectively coupled together and operate as one unit without departing from the principle of the invention.

It will be understood that the terms "comprise", "include", and "have", used herein specify the presence of stated elements but do not preclude the presence or addition of any other elements unless explicitly noted. Unless otherwise defined, all terms including technical and scientific terms used herein have the same meaning as commonly understood by a skilled person in the art to which the present invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The foregoing descriptions and the accompanying drawings have been presented in order to explain the certain principles of the present invention. A person skilled in the art to which the invention relates can make many modifications and variations by combining, dividing, substituting for or changing elements without departing from the principle of the invention. The foregoing embodiments disclosed herein shall be interpreted as illustrative only not as limitative of the principle and scope of the invention. It should be understood that the scope of the invention shall be defined by the appended Claims and all of their equivalents fall within the scope of the invention.

### INDUSTRIAL APPLICABILITY

According to the present invention as set forth above, the shock absorber 200 instantaneously absorbs force that would otherwise cause a driver to be leaned forward, such that the rider stays with both feet on the footboard part 120, and the load of the weight of the rider is continuously applied to the footboard part 120. This can consequently prevent the footboard part 120 or the rear wheel parts 110 from being raised by way of inertia, thereby preventing a rollover.

**<Description of the Reference Numerals in the Drawings>**

| | | | |
|---|---|---|---|
| 100: | three-wheeled vehicle | 110: | rear wheel part |
| 112: | front wheel part | 120: | footboard part |
| 130: | frame | 132: | connecting frame |
| 134: | fixed frame | 136: | first variable frame |
| 138: | second variable frame | 138a: | vertical section |
| 138b: | horizontal section | 140: | hinge |
| 150: | handlebar part | 200: | shock absorber |

## Claims

1. An upright three-wheeled vehicle comprising:
a pair of rear wheel parts disposed on both sides, the rear wheel parts facing each other;
a footboard part disposed between and connected to the pair of rear wheel parts, allowing a rider to put both feet thereon in an upright position;
a handlebar part extending upward from the frame, the handlebar part controlling a direction in which a front wheel part rotates;
a frame, wherein the frame includes a connecting frame within which a portion of a lower end of a shaft of the handlebar part is rotatably accommodated, a fixed frame fixedly connecting both side portions of the connecting frame to a front top surface of the footboard part, a first variable frame connected to a distal end of the shaft of the handlebar part to rotate the front wheel part following rotation of the shaft, and a second variable frame fixedly disposed on a central axis of the front wheel part; and
a shock absorber disposed between an upper central portion of the second variable frame and an upper central portion of the first variable frame, wherein the shock absorber absorbs inertia-induced force that causes a rider to lean forward in an event of braking.

2. The upright three-wheeled vehicle according to claim 1, wherein the second variable frame comprises a vertical section rounded to surround an upper portion of the front wheel part and a horizontal section extending in a horizontal direction bent by a predetermined angle from the vertical part, a distal end of the horizontal section being coupled to both ends of the first variable frame by means of a hinge.

3. The upright three-wheeled vehicle according to claim 1, wherein the shock absorber comprises a coil spring.

4. The upright three-wheeled vehicle according to claim 2, wherein bent portions of the vertical section and the horizontal section of the second variable frame are fixedly disposed with respect to the central axis of the front wheel part.
